# EUROPÄISCHE PATENTANMELDUNG

(11) **EP 1 348 915 A2**
(43) Veröffentlichungstag der Anmeldung: **01.10.2003**
(21) Anmeldenummer: 03005508.1
(22) Anmeldetag: 11.03.2003
(51) Int. Cl.: F24J 2/52, H01L 31/042

(54) **Befestigungsvorrichtung für Bauteile, insbesondere Kollektoren**

(30) Priorität: 28.03.2002 DE 10213902
(71) Anmelder: SCHÜCO International KG, 33609 Bielefeld (DE)
(72) Erfinder: Kaiser, Konrad, 59590 Geseke (DE); Wiggers, Melanie, 32657 Lemgo (DE)
(74) Vertreter: Specht, Peter, Dipl.-Phys.

(57) **Zusammenfassung**

Eine Befestigungsvorrichtung für Bauteile, insbesondere Kollektoren, auf Dächern, die als Dachanker zur Montage an einer Dachlatte oder einem Dachsparren und zur Auflage des Bauteiles ausgelegt ist, zeichnet sich dadurch aus, dass der Dachanker ein Fußteil (9) zur Montage auf der Dachlatte oder dem Dachsparren aufweist, an dem ein Winkelteil (11) zur direkten Auflage des Bauteiles oder zur Anbringung eines Auflagewinkels (15) horizontal verschieblich geführt und/oder verschwenkbar gelagert ist.

## Beschreibung

Die Erfindung betrifft eine Befestigungsvorrichtung für Bauteile, insbesondere Kollektoren, nach dem Oberbegriff des Anspruches 1.

Befestigungsvorrichtungen für Bauteile auf Dächern werden beispielsweise als Dachanker oder -haken ausgebildet und insbesondere für die Montage von Kollektoren auf Dächern verwendet. So werden Dachanker nach dem Stand der Technik beispielsweise aus einer Metallstrebe, insbesondere einer Stahlstrebe, gefertigt, die an ihren beiden gegenüberliegenden Enden zu U-förmigen Bereichen umgebogen ist, wobei einer der U-förmigen Bereiche die Dachlatte hintergreift und der andere U-förmige Bereich aus dem Dach vorsteht und zur Auflage von Dachschienen oder direkt zur Auflage von Kollektoren ausgebildet ist.

Die aus dem Dach ragenden U-förmigen Bereiche weisen allgemein ein Langloch zur vertikalen Einstellung sowie einen mittels zweier Schrauben an einem Grundteil befestigbaren Winkel auf, der eine Höheneinstellbarkeit ermöglicht.

Bekannt sind auch Dachanker zur Befestigung auf den vertikal verlaufenden Sparren eines Schrägdaches. Problematisch ist hierbei jedoch, daß eine horizontale Anpassung an die Kollektorbreite nicht möglich ist.

Weiter problematisch ist, daß die Auflagefläche für die Bauteile wie Kollektoren oder Dachschienen durch die Winkelstellung des Dachankers selbst vorgegeben ist. Diese Winkelstellung stimmt aber nicht immer mit der gewünschten Montagestellung des zu montierenden Bauteiles überein.

Es ist daher die Aufgabe der Erfindung, den gattungsgemäßen Dachanker derart weiterzuentwickeln, daß insbesondere eine leichte Einstellmöglichkeit an die geometrischen Montagegebenheiten im Bereich der Sparren gegeben ist.

Die Erfindung löst diese Aufgabe durch den Gegenstand des Anspruches 1. Danach weist der Dachanker ein Fußteil zur Montage auf der Dachlatte oder dem Dachsparren aufweist, an dem ein Winkelteil zur direkten Auflage des Bauteiles oder zur Anbringung eines Auflagewinkels insbesondere horizontal beweglich, vorzugsweise verschieblich geführt ist. Mit dieser Maßnahme wird die Anpassbarkeit der Befestigungsvorrichtung an die jeweiligen Montagegegebenheiten insbesondere im Bereich der Sparren optimiert.

Nach einer weiteren - auch unabhängig zu betrachtenden - Variante ist das Winkelteil am Fußteil verschwenkbar gelagert und vorzugsweise in einer Schwenkposition fixierbar. Diese Maßnahme ermöglicht eine an die jeweilige Einbaugegebenheiten anpassbare Ausrichtung der Auflagefläche für das Bauteil, was die Montage vereinfacht und verbilligt.

Vorzugsweise ist das Winkelteil über eine Nut-Feder-Verbindung am Fußteil angeordnet, die eine kostengünstige Möglichkeit dazu darstellt, die Verschwenkbarkeit und/oder die Relativverschiebarkeit der Elemente Fußteil und Winkelteil zueinander zu realisieren.

Optimiert wird die Einstellbarkeit vorzugsweise durch eine Höhenverstellbarkeit des Auflagewinkels am Winkelteil und eine Langlochbefestigung am Auflagewinkel.

Vorzugsweise bestehen das Fußteil, das Winkelteil und die Winkelauflage aus Leichtmetall wie einer Aluminiumlegierung und/oder sie sind als Strangpressprofile ausgebildet, was die Herstellkosten und das Gewicht gegenüber einer Stahllösung senkt.

Vorteilhafte Ausgestaltungen sind den Unteransprüchen zu entnehmen.

Nachfolgend wird die Erfindung anhand von Ausführungsbeispielen unter Bezug auf die Zeichnung näher beschrieben. Es zeigt:
- Figur 1: einen Teilbereich eines Dachstuhles mit einem Dachanker nach dem Stand der Technik;
- Figur 2: eine Seitenansicht eines erfindungsgemäßen Dachankers;
- Figur 3: eine perspektivische Ansicht eines erfindungsgemäßen Dachankers;
- Figur 4: eine Seitenansicht eines weiteren erfindungsgemäßen Dachankers;
- Figur 5: eine Sprengansicht von Elementen des Ausführungsbeispiels aus der Figur 4.

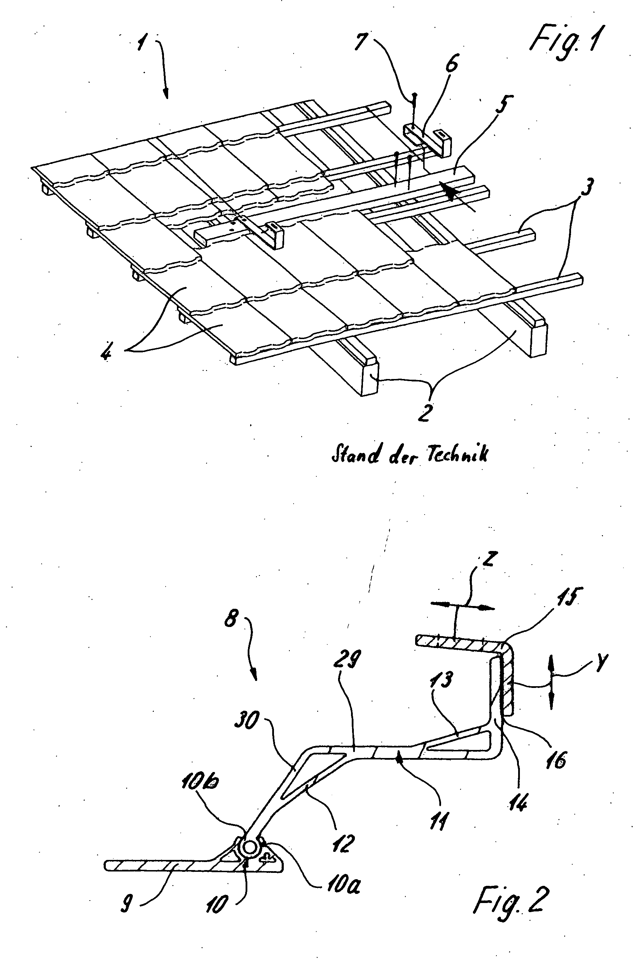

Figur 1 zeigt einen Teilbereich eines Dachstuhls aus Sparren 2 und Dachlatten 3, wobei die Sparren 2 vom Dachfrist zur Traufe abwärts verlaufen und wobei auf den Sparren 2 horizontal die Dachlatten 3 angeordnet sind.

An die Dachlatten 3 sind die Ziegel 4 angehängt, die auf den Dachlatten 3 einander überlappend aufliegen. Der Dachstuhlaufbau ist rein beispielhaft zu verstehen. Es ist prinzipiell auch ein anderer Dachstuhlaufbau oder eine andere Bedeckung, z.B. aus Schieferplatten oder Stroh, denkbar, solange die Möglichkeit zum Einhängen der Dachanker gegeben ist.

An den quer verlaufenden Dachlatten 3 werden die als Dachanker 6 ausgebildeten Befestigungsvorrichtungen montiert. Hierzu werden einige der Dachziegel 4 zunächst entfernt und es wird bei Bedarf eine zusätzliche Dachlatte 5 zwischen den übrigen Dachlatten 3 angebracht, falls das Raster der Kollektoren nicht mit dem Raster der Dachlatten 3 übereinstimmt. Sodann werden die Dachanker 6 der Befestigungsvorrichtung hinter die Dachlatte 5 gehakt und dort mit einer Schraube 7 gesichert.

Nach der Montage wird das Dach 1 mit den Ziegeln 4 wieder verschlossen, so daß die Ziegel 4 auf der Dachlatte 5 und dem Dachanker 6 aufliegen. Lediglich ein zweiter Bereich des Dachankers 6 schaut unter den Ziegeln hervor und dient zur Befestigung von auf dem Dach anzubringenden Bauteilen wie Kollektoren.

Der erfindungsgemäße Dachanker 8 nach Figur 2 weist im Gegensatz zu dem Dachanker aus Figur 1 einen mehrteiligen Aufbau auf. So umfaßt der erfindungsgemäße Dachanker 8 ein als Fußplatte 9 ausgebildetes Fußteil zur Befestigung auf einem Dachelement, insbesondere Dachsparren 2, ein an der Fußplatte 9 befestigbares Winkelteil 11 und einen am Winkelteil 11 befestigbaren Auflagewinkel 15 zur Auflage des Bauteils oder zur Auflage einer Dachschiene zur Auflage des Bauteils (nicht dargestellt).

Die Fußplatte 9 und das Winkelteil 11 sind miteinander durch eine Nut-Feder-Führung 10 mit einer Nut 10a an der Fußplatte 9 und einer Feder 10b an dem Winkelteil 11 verbunden.

Das Winkelteil 11 weist einen im wesentlichen Z-förmigen Aufbau auf mit einem mittleren Längsschenkel 29, einem hierzu stumpfwinklig ausgerichteten Seitenschenkel 30, der die Feder 10b aufweist und einen am gegenüberliegenden Ende des Längsschenkels 29 senkrecht zum Längsschenkel ausgerichteten dritten Schenkel 14.

Zwischen den Schenkeln 29 und 30 sowie zwischen den Schenkeln 29 und 14 sind jeweils Diagonalstege 12 und 13 ausgebildet, welche die Statik des mittleren Winkelteils 11 optimieren und eine besonders hohe statische Belastung ermöglichen.

Am Schenkel 14 ist ein Auflagewinkel 15 höhenverstellbar angeordnet, wobei die Höhenverstellbarkeit zwischen dem Auflagewinkel 15 und dem Schenkel 14 durch eine Verzahnung 32 zwischen den beiden Elementen 14 und 15 realisiert wird.

Nach der Vorwahl der Auflagehöhe werden der Schenkel 14 und das Winkelteil 15 mittels einer Schraube 31 miteinander verschraubt. Im Auflageschenkelbereich des Winkels 15 wird vorzugsweise ein Langloch angeordnet, so daß eine Verstellbarkeit sowohl in Y-Richtung (d.h. im wesentlichen senkrecht zum Dach) als auch in Z-Richtung (d.h. parallel zur Richtung der Dachsparren) gegeben ist.

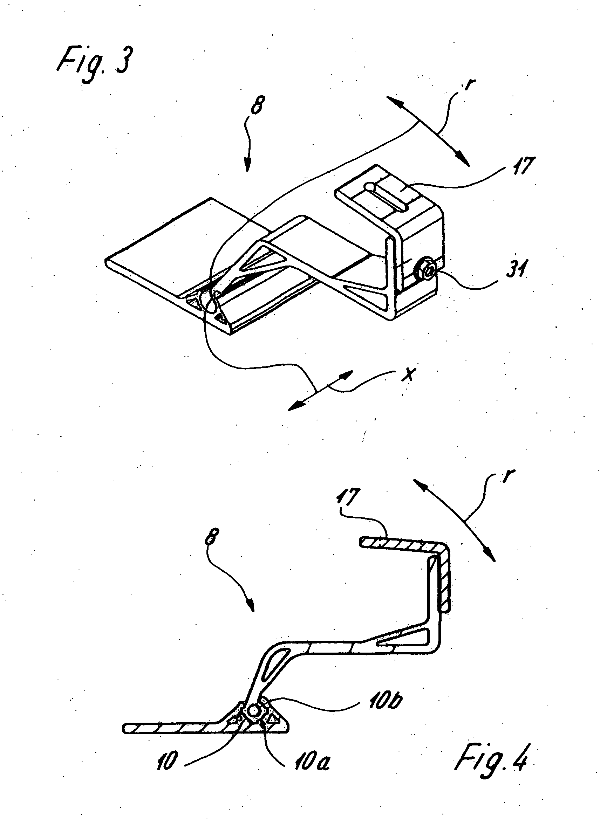

Wie in Figur 3 zu erkennen, ist durch die Nut-Feder-Verbindung auch eine horizontale Verstellung in X-Richtung gegeben, so daß unabhängig vom Sparrenabstand stets eine Montage unterschiedlich breiter zu montierender Bauteile möglich ist.

Aus Figur 3 ist ferner zu erkennen, daß auch eine Verschwenkbarkeit bzw. Verstellbarkeit R in radialer Richtung gegeben ist, so daß eine Anpassung der Ausrichtung der Auflagefläche 17 für die zu montierenden Bauteile besteht.

Nach Fig. 3 sind die am Winkelteil 11 angeordnete Feder 10b und die am Fußteil ausgebildete Nut 10a im Querschnitt jeweils im wesentlichen kreisförmig, wobei die Öffnung der Nut 10a derart gewählt ist, dass die Feder 10b in der Nut 10a um einen vorgegebenen Winkel verschwenkbar ist. Eine Fixierung der Schwenkposition kann durch eine hier nicht dargestellte Fixierschraube erfolgen.

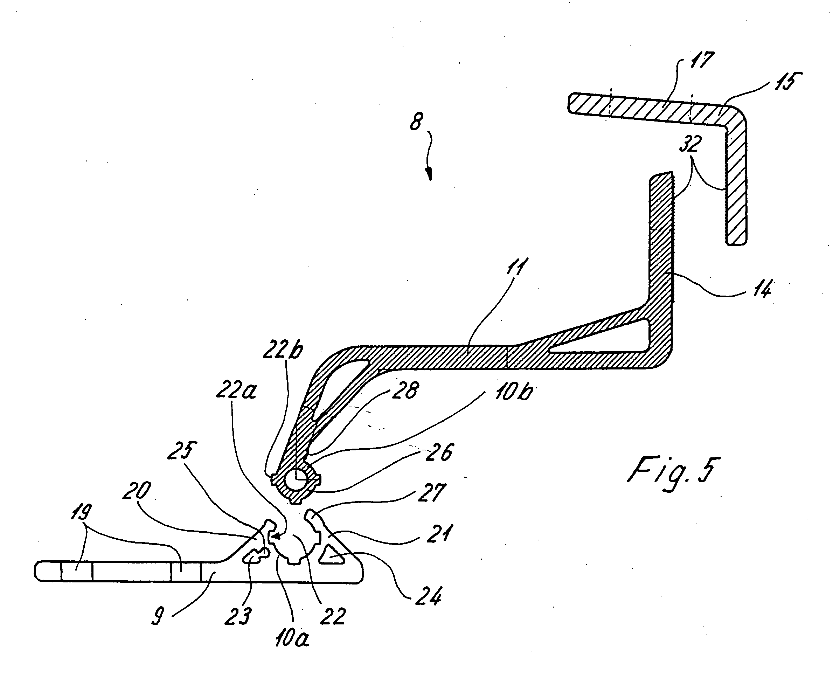

Nach Figur 4 und 5 ist die Nut-Feder-Führung 10 annähernd unverschwenkbar bzw. starr ausgebildet. Die an sich kreisförmige Nut ist an ihrem Außenumfang mit Ausnehmungen 22a versehen, in welche Vorsprünge 22b an der Feder 10b mit vorgegebenem Spiel eingreifen, so dass noch eine geringe Verschwenkbarkeit erhalten bleibt. Lediglich ein vorgegebenes Spiel zwischen Nut und Feder ermöglicht noch ein geringes Verschwenken der Auflagefläche 17. Realisierbar ist darüber hinaus noch das horizontale Verschieben der beiden Teile relativ zueinander senkrecht zur Bildebene.

Das Fußteil 9 ist in Längsrichtung der Nut 10a um einen vorgegebenen Verschiebeweg länger als die Breite des eingesetzten Dachankers 8 in dieser Richtung, um die Verschiebbarkeit zu realisieren.

Wie in Figur 5 zu erkennen, ist das Fußteil wiederum als Fußplatte 9 ausgebildet. Andere Formen, z.B. eine Hakenform, eine Prismen- oder Rechteckform sind auch denkbar.

Im Fußteil 9 sind vorteilhafterweise bereits Bohrungen 19 für Befestigungsmittel an Dachsparren angeordnet. Stege 20 und 21 bilden die Nut 10a aus.

Hohlkammern 23 und 24 ermöglichen einerseits eine Materialeinsparung. Die Hohlkammer 23 bildet darüber hinaus einen Schraubkanal 25 aus, in den Schrauben eingesetzt werden können, um einen seitlichen Anschlag für das Winkelteil 11 zu bilden. Damit werden beide Teile unverlierbar miteinander verbunden. Korrespondierend zur Nut 10a ist das Federteil 26 des Winkelteils 11 ausgebildet. In X-Richtung ist eine seitliche Verstellung durch Verschiebbarkeit des Federteils 26 in der Nut 10a gegeben.

Das Fußteil 9 weist einen Steg 27 in Verlängerung des Steges 21 auf, der als Anschlag dient, welcher auf eine Anschlagfläche 28 am Winkelteil 11 abgestimmt ist und eine begrenzte Winkelverstellung der Auflage 17 für das zu montierende Bauteil ermöglicht.

### Bezugszeichenliste

- 1: Dachstuhl
- 2: Sparre
- 3: Dachlatte
- 4: Dachziegel
- 5: Dachlatte
- 6: 6' Dachanker
- 8: Dachanker
- 9: Fußplatte
- 10: Nut-Feder-Führung
- 10a: Nut
- 10b: Feder
- 11: Winkelteil
- 12: Diagonalsteg
- 13: Diagonalsteg
- 14: Schenkel
- 15: Auflagewinkel
- 17: Auflagefläche
- 19: Bohrung
- 20: Steg
- 21: Steg
- 22a: Ausnehmungen
- 22b: Vorsprünge
- 23: Hohlkammer
- 24: Hohlkammer
- 25: Schraubkanal
- 26: Federteil
- 27: Steg
- 28: Anschlagfläche
- 29: Längsschenkel
- 30: Seitenschenkel
- 31: Schraube
- 32: Verzahnung

## Patentansprüche

1. Befestigungsvorrichtung für Bauteile, insbesondere Kollektoren, auf Dächern, die als Dachanker zur Montage an einer Dachlatte oder einem Dachsparren und zur Auflage des Bauteiles ausgelegt ist, **dadurch gekennzeichnet, daß** der Dachanker ein Fußteil (9) zur Montage auf der Dachlatte oder dem Dachsparren aufweist, an dem ein Winkelteil (11) zur direkten Auflage des Bauteiles oder zur Anbringung eines Auflagewinkels (15) insbesondere horizontal beweglich, vorzugsweise verschieblich, angeordnet ist.

2. Befestigungsvorrichtung nach Anspruch 1 oder nach dem Oberbegriff des Anspruches 1, **dadurch gekennzeichnet, daß** das Winkelteil (11) am Fußteil (9) verschwenkbar gelagert und vorzugsweise in einer Schwenkposition fixierbar ist.

3. Befestigungsvorrichtung nach Anspruch 1 oder 2, **dadurch gekennzeichnet, daß** Winkelteil (11) über eine Nut-Feder-Verbindung am Fußteil (9) angeordnet ist.

4. Befestigungsvorrichtung nach einem der vorstehenden Ansprüche, **dadurch gekennzeichnet, dass** am Winkelteil (11) ein Auflagewinkel (15) höhenverstellbar angeordnet ist.

5. Befestigungsvorrichtung nach einem der vorstehenden Ansprüche, **dadurch gekennzeichnet, dass** zwischen dem Winkelteil (11) und dem Auflagewinkel (15) eine Verzahnung (32) ausgebildet ist.

6. Befestigungsvorrichtung nach einem der vorstehenden Ansprüche, **dadurch gekennzeichnet, dass** im Auflagewinkel (15) ein Langloch ausgebildet ist.

7. Befestigungsvorrichtung nach einem der vorstehenden Ansprüche, **dadurch gekennzeichnet, dass** das Winkelteil (11) einen im wesentlichen Z-förmigen Aufbau aufweist, mit einem Längsschenkel (29), einem hierzu stumpfwinklig ausgerichteten Seitenschenkel (30) und einen am gegenüberliegenden Ende des Längsschenkels 29 senkrecht zum Längsschenkel (29) ausgerichteten dritten Schenkel (14).

8. Befestigungsvorrichtung nach einem der vorstehenden Ansprüche, **dadurch gekennzeichnet, dass** das Winkelteil (11) Hohlkammern aufweist.

9. Befestigungsvorrichtung nach einem der vorstehenden Ansprüche, **dadurch gekennzeichnet, dass** die am Winkelteil (11) angeordnete Feder (10b) und die am Fußteil ausgebildete Nut (10a) im Querschnitt jeweils im wesentlichen kreisförmig ausgebildet sind, wobei die Öffnung der Nut (10a) derart gewählt ist, dass die Feder (10b) in der Nut (10a) um einen vorgegebenen Winkel verschwenkbar ist.

10. Befestigungsvorrichtung nach einem der vorstehenden Ansprüche, **dadurch gekennzeichnet, dass** im Fußteil Bohrungen (19) für Befestigungsmittel an Dachsparren angeordnet sind.

11. Befestigungsvorrichtung nach einem der vorstehenden Ansprüche, **dadurch gekennzeichnet, dass** die Nut (10a) von Stegen begrenzt ist und dass die Stege wenigstens eine als Schraubkanal nutzbare Hohlkammer aufweisen.

12. Befestigungsvorrichtung nach einem der vorstehenden Ansprüche, **dadurch gekennzeichnet, dass** das Fußteil (9) einen Anschlag aufweist, welcher auf eine Anschlagfläche (28) am Winkelteil (11) abgestimmt ist.

13. Befestigungsvorrichtung nach einem der vorstehenden Ansprüche, **dadurch gekennzeichnet, dass** die Nut (10a) an ihrem Außenumfang mit Ausnehmungen (22a) versehen ist, in welche Vorsprünge (22b) an der Feder (10b) mit Spiel eingreifen.

14. Befestigungsvorrichtung nach einem der vorstehenden Ansprüche, **dadurch gekennzeichnet, dass** das Fußteil (9), das Winkelteil (11) und die Winkelauflage (18) aus Leichtmetall bestehen.

15. Befestigungsvorrichtung nach einem der vorstehenden Ansprüche, **dadurch gekennzeichnet, dass** das Fußteil (9), das Winkelteil (11) und die Winkelauflage (18) als Strangpressprofile ausgebildet sind.

16. Befestigungsvorrichtung nach einem der vorstehenden Ansprüche, **dadurch gekennzeichnet, dass** das Fußteil (9) in Längsrichtung der Nut (10a) um einen vorgegebenen Verschiebeweg länger als die Breite des eingesetzten Dachankers (8).
